## Europäisches Patentamt
## European Patent Office
## Office européen des brevets

(19)

(11) Veröffentlichungsnummer: **0 074 668**
**B1**

(12) **EUROPÄISCHE PATENTSCHRIFT**

(45) Veröffentlichungstag der Patentschrift:
04.09.85

(51) Int. Cl.⁴: **B 01 J 8/24** // F23C11/02

(21) Anmeldenummer: **82108480.3**

(22) Anmeldetag: **15.09.82**

(54) **Aufgabeeinrichtung für Wirbelfluid zum Betreiben eines mehrstufigen Wirbelschichtreaktors.**

(30) Priorität: **16.09.81 DE 3136712**

(43) Veröffentlichungstag der Anmeldung:
**23.03.83 Patentblatt 83/12**

(45) Bekanntmachung des Hinweises auf die Patenterteilung:
**04.09.85 Patentblatt 85/36**

(84) Benannte Vertragsstaaten:
**BE FR GB IT NL**

(56) Entgegenhaltungen:
**EP - A - 0 012 857**
**GB - A - 1 536 846**
**GB - A - 2 094 171**
**US - A - 3 001 931**

(73) Patentinhaber: **Bergwerksverband GmbH,
Franz-Fischer-Weg 61, D-4300 Essen 13 (DE)**

(72) Erfinder: **Holl, Lothar, Hubertstrasse 282,
D-4300 Essen 13 (DE)**

EP 0 074 668 B1

ACTORUM AG

**Beschreibung**

Die Erfindung betrifft einen mehrstufigen Wirbelschichtreaktor gemäss dem Oberbegriff von Patentanspruch 1 sowie ein Verfahren zum Betreiben eines solchen Wirbelschichtreaktors.

Wirbelschichtreaktoren werden z.B. auf dem Kraftwerkssektor zur Dampf- bzw. Warmwassererzeugung, zur oxidativen oder reduzierenden Schüttgutbehandlung, zur Vergasung bei Kalzinierprozessen, zur Erzröstung und vielem anderen mehr eingesetzt. Dabei wird das zu behandelnde Material in einem Behälter mit Hilfe eines zumeist von unten in diesen eingespeisten Wirbelfluids in der Schwebe gehalten. Sofern die Menge an zu behandelndem Material geändert werden soll, empfiehlt sich eine mehrstufige Auslegung des Wirbelschichtreaktors, bei dem die einzelnen Stufen getrennt voneinander betrieben werden können (Teillastbetrieb). In der Regel besteht die wirbelnde Schicht überwiegend aus einem inerten Material, wie z.B. Asche, Kalkstein oder Sand, in welcher das zu behandelnde Gut verteilt ist.

Es ist bereits vorgeschlagen worden, bei einem Wirbelschichtreaktor mit einem sogenannten Anströmboden verschiedene Sektionen des Anströmbodens getrennt voneinander mit dem Wirbelfluid zu beaufschlagen, so dass einzelne, horizontal nebeneinanderliegende Bereiche der Wirbelschicht getrennt voneinander betrieben werden können. Dabei wird es jedoch als Nachteil empfunden, wenn aus der oder den in Betrieb befindlichen Sektionen (Leistungsstufen) z.B. kleinere Partikel des zu behandelnden Materials nach oben geschleudert werden und diese sich auf Sektionen absetzen, welche gerade nicht in Betrieb sind.

Es wurde auch bereits vorgeschlagen, Wirbelschichtreaktoren mit vertikal übereinanderliegenden Leistungsstufen, aber einem einheitlichen Anströmboden für alle Stufen zu betreiben und eine Teillastregelung dadurch herbeizuführen, dass bei Bedarf aus den jeweils obersten Stufen das zu behandelnde Material abgezogen und zwischengelagert wird; dies erfordert jedoch zumindest getrennte Dosiereinrichtungen für jede Leistungsstufe.

Es ist deshalb die Aufgabe der Erfindung, einen mehrstufigen Wirbelschichtreaktor der eingangs genannten Art bereitzustellen, bei welchem die vorerwähnten Nachteile vermieden und insbesondere die Möglichkeiten zur Teillastregelung des Wirbelschichtreaktors auf einfache Weise verbessert werden können sowie ein Verfahren zum Betreiben eines solchen Wirbelschichtreaktors vorzuschlagen.

Die Aufgabe wird, im Hinblick auf eine Vorrichtung, durch die kennzeichnenden Merkmale des Anspruches 1 und, im Hinblick auf ein Verfahren, durch die kennzeichnenden Merkmale des Anspruches 6 gelöst. Weiterbildungen der Erfindung ergeben sich aus den Unteransprüchen.

Durch die Erfindung wird erreicht, dass das gesamte zu behandelnde Material auch bei veränderten Leistungsanforderungen an den Wirbelschichtreaktor im Reaktor verbleiben kann, ohne dass die sich in Betrieb befindlichen Leistungsstufen nachteilige Auswirkungen auf die stilliegenden Leistungsstufen verursachen. Weiterhin wird eine einfache Leistungsregelung durch Inbetriebnahme oder Stillsetzung von verschiedenen Behandlungsstufen (Leistungsstufen) erreicht. Der gesamte Wirbelschichtreaktor kann mit nur einer einzigen Einspeiseeinrichtung für das zu behandelnde Material versehen sein. Die Behandlung kann unter verschiedenen Druckbedingungen erfolgen.

Bevorzugt wird man den erfindungsgemässen Wirbelschichtreaktor bei der Wärmebereitstellung durch thermische Behandlung von Brennstoffen einsetzen. Hierbei ergibt sich als weiterer Vorteil, dass im Falle von Entgasungsvorgängen in stillgesetzten unteren Behandlungsstufen solche Gase in den oberen, in Betrieb befindlichen Behandlungsstufen mit verbrannt werden können.

Es ist erfindungsgemäss aber auch möglich, die einzelnen Behandlungsstufen mit voneinander verschiedenen Wirbelfluida zu beaufschlagen, d.h. z.B. in oxidierender oder reduzierender Atmosphäre.

Den erfindungsgemässen Wirbelschichtreaktor wird man bevorzugt derart betreiben, dass man bei zunehmender Leistungsanforderung zunächst die oberste und dann die nach unten nachfolgenden Behandlungsstufen nacheinander in Betrieb nimmt bzw. zunächst die unterste und dann nach oben nacheinanderfolgend die nächsten Behandlungsstufen ausser Betrieb nimmt, wenn eine Leistungsreduzierung erwünscht ist. Es ist aber auch möglich, lediglich die Menge an Wirbelfluid für die einzelnen Behandlungsstufen im Verhältnis zueinandner zu verändern und dadurch unterschiedliche Leistungen in den einzelnen Behandlungsstufen zu erzielen. Schliesslich ist es zusätzlich auch möglich, die Wirbelgeschwindigkeit, die Wirbelschichttemperatur sowie auch die Wirbelschichthöhe nach den bekannten technischen Kriterien bei einem erfindungsgemässen Wirbelschichtreaktor zu ändern, ohne dass hierfür zu behandelndes Material gesondert zu- oder abgeführt werden muss.

Weitere Ziele, Merkmale, Vorteile und Anwendungsmöglichkeiten der vorliegenden Erfindung ergeben sich aus der nachfolgenden Beschreibung eines Ausführungsbeispieles anhand der beiliegenden Zeichnung. Dabei bilden alle beschriebenen und/oder bildlich dargestellten Merkmale für sich oder in beliebiger sinnvoller Kombination den Gegenstand der vorliegenden Erfindung, auch unabhängig von ihrer Zusammenfassung in den Ansprüchen oder deren Rückbeziehung.

In der Zeichnung zeigen:

Fig. 1 einen dreistufigen Wirbelschichtreaktor im Vertikalschnitt,

Fig. 2 einen vierstufigen Wirbelschichtreaktor im Vertikalschnitt,

Fig. 3 einen dreistufigen Wirbelschichtreaktor mit Wärmetauscheinrichtung im Ruhezustand,

Fig. 4 einen zweistufigen Wirbelschichtreaktor mit einer Wärmetauscheinrichtung im Vollastbetrieb,

Fig. 5 einen dreistufigen Wirbelschichtreaktor mit einer einzigen Wärmetauscheinrichtung im Teillastbetrieb.

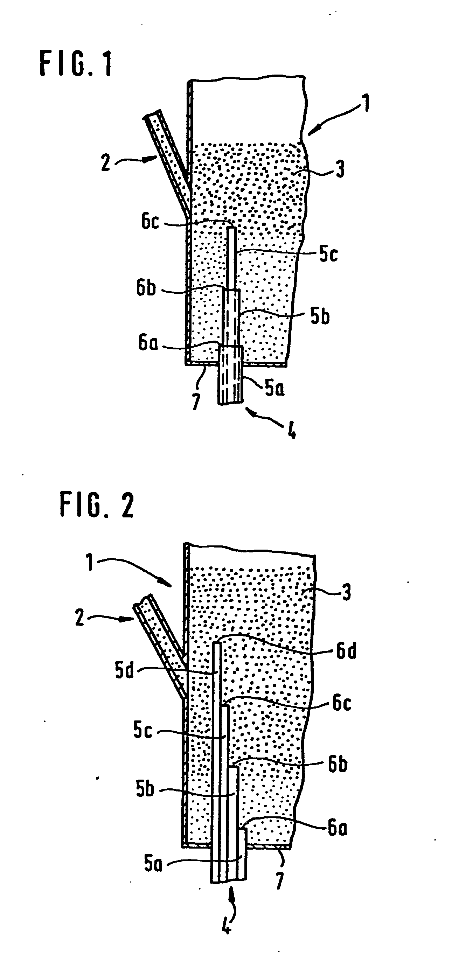

In Fig. 1 besteht der Wirbelschichtreaktor aus einem Behälter 1 mit einer Einspeiseeinrichtung 2 für gekörntes, zu behandelndes Material 3 sowie einer Aufgabeeinrichtung 4 für Wirbelfluid. Die Aufgabeeinrichtung 4 besteht aus Rohren 5a, 5b und 5c, die in verschiedenen Höhen 6a, 6b und 6c über dem Behälterboden 7 jeweils mit z.B. einer einzigen oder mehreren seitlichen Öffnungen enden und einzeln mit Wirbelfluid beaufschlagbar sind (die Öffnungen können aber auch in beliebig anderer Art am Rohrende angeordnet sein — wie z.B. auch bei sogenannten Glockenböden). In der Fig. 1 ist lediglich Rohr 5c mit Wirbelfluid beaufschlagt, so dass lediglich das im wesentlichen oberhalb der Höhe 6c sich befindende Material 3 wirbelt, während das darunterliegende Material ruht. Die Rohre 5a bis 5c sind zumindest innerhalb des Behälters 1 konzentrisch zueinander angeordnet. Demgegenüber sind die Rohre 5a bis 5d in Fig. 2 getrennt voneinander — möglicherweise auch seitlich — in den Behälter 1 eingeführt; in diesem Fall sind die Rohre 5b bis 5d mit Wirbelfluid beaufschlagt, so dass lediglich die unterste Schicht (Behandlungsstufe) des zu behandelnden Materials 3 ruht.

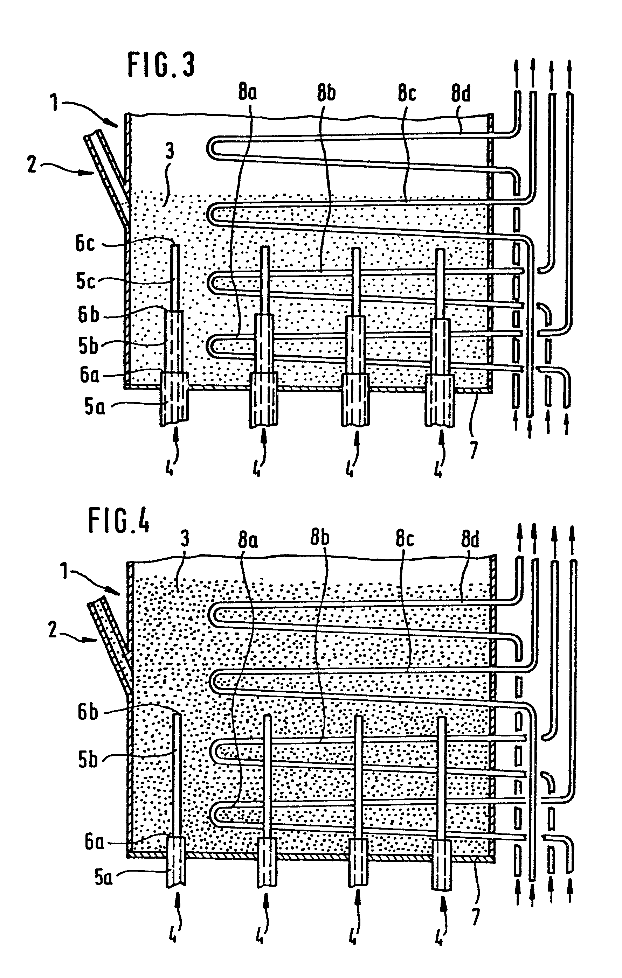

In Fig. 3 sind mehrere der Rohre 5a bis 5c der Fig. 1 nebeneinander im Behälter 1 angeordnet. Ausserdem sind Wärmetauscheinrichtungen 8a bis 8d getrennt und für verschiedene Höhen oberhalb des Behälterbodens 7 im Behälter 1 angeordnet. In dieser Fig. 3 ist keines der Rohre 5a bis 5c mit Wirbelfluid beaufschlagt, so dass das gesamte Material 3 ruht und die oberste Wärmetauscheinrichtung 8d nicht mehr in dem Material 3 eingetaucht ist.

Der in Fig. 4 dargestellte Wirbelschichtreaktor entspricht dem der Fig. 3, jedoch mit dem Unterschied, dass nur zwei Stufen vorgesehen sind (Rohre 5a und 5b) und dass nunmehr alle Rohre mit Wirbelfluid beaufschlagt sind und infolge der hierdurch bedingten Ausdehnung der Wirbelschicht auch die Wärmetauscheinrichtung 8d in dem Material eingetaucht ist.

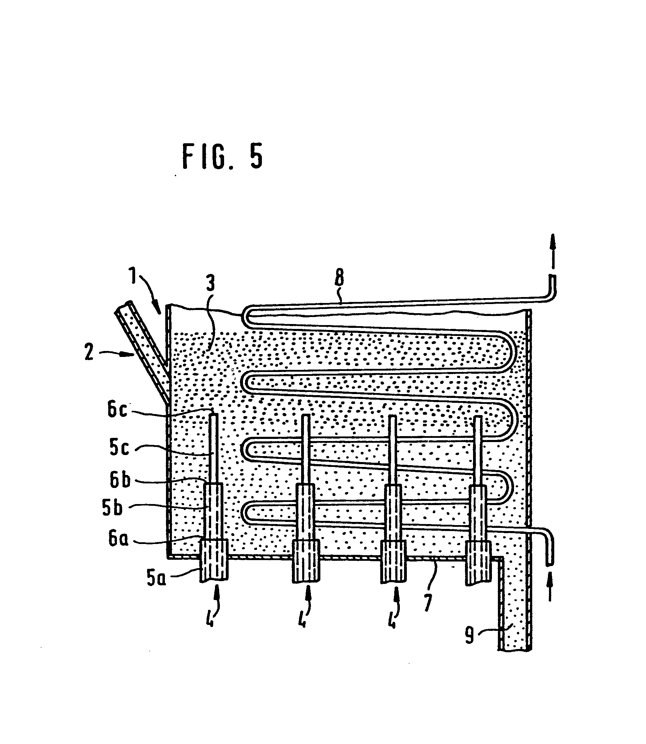

In Fig. 5 ist auch eine in den übrigen Figuren nicht dargestellte Entnahmeeinrichtung 9 für behandeltes Material 3 dargestellt. Hier ist, wie in Fig. 1, nur die oberste Behandlungsstufe in Betrieb und die Wärmetauscheinrichtung 8 durchzieht den gesamten Behälter 1. Ausserdem ist vorgesehen, dass jeweils die Rohre 5a bzw. 5b bzw. 5c mit verschiedenen Wirbelfluida (z.B. verschiedene Temperaturen) beaufschlagt werden können.

Mit der erfindungsgemässen Vorrichtung können an sich alle Materialien behandelt werden, für die die Wirbelschichttechnik angezeigt ist — dementsprechend stellt das nachfolgende Ausführungsbeispiel nur eine von sehr vielen Möglichkeiten dar.

*Ausführungsbeispiel*

Das nachfolgende Beispiel bezieht sich auf die atmosphärische Wirbelschichtverbrennung von Kohle.

Der hier verwendete Wirbelschichtreaktor hat eine Grundfläche (Behälterboden) von 400 × 800 mm. Die Wirbelschichthöhe beträgt im voll fluidisierten Zustand 1,2 m bei einer Anströmgeschwindigkeit von 1,5 m/sec — bezogen auf den leeren Reaktor. In der Mitte einer der Schmalseiten befindet sich 230 mm über dem Boden die einzige Kohleaufgabestelle.

Die Korngrösse des inerten Wirbelschichtmaterials, welches in der Wirbelschicht verbleibt (z.B. Asche, Kalkstein und/oder Sand), beträgt etwa 0,25 bis 4 mm. Die Korngrösse der zudosierten Kohle, die einen Gehalt an flüchtigen Bestandteilen von 30% (aschefrei) und einen Schwefelanteil von 1,7 Gew.-% (bezogen auf wasserfreie Kohle) hat, beträgt 0 bis 4 mm, die des mit der Kohle zudosierten Kalksteins 0 bis 3 mm. Der Feuchtigkeitsgehalt der Kohle liegt bei ca 2%, der des Kalksteins bei ca. 0%.

Die Reaktortemperatur (Wirbelgastemperatur) liegt bei ca. 850°C, der Überdruck der als Wirbelgas verwendeten Luft unterhalb des Behälterbodens beträgt 130 mbar. Im Abgas wird bei einer Zuschlagsmenge im Kalkstein-Schwefel-Molverhältnis von 1,2 der Grenzwert für die $SO_2$-Emission in der TA-Luft unterschritten. Die Zuschlagsmenge an Kalkstein beträgt dann etwa 6% der Kohle. Der $O_2$-Gehalt im Abgas beträgt etwa 5%.

Die Aufgabeeinrichtungen für das Wirbelgas entsprechen der Fig. 5, wobei ihre gegenseitigen Abstände in beiden Richtungen etwa 100 mm betragen und die Austrittshöhen bei 50, 300 und 550 mm über dem Behälterboden liegen.

Die Inbetriebnahme des Wirbelschichtreaktors geschieht dadurch, dass das Wirbelfluid durch das Rohr 5c fliesst und an der Stelle 6c durch Bohrungen in den Reaktor gelangt. Wird es in ausreichender Menge zugegeben, geht das Material 3 oberhalb der Stelle 6c in einen flüssigkeitsähnlichen Zustand über. Zur ersten Aufheizung der Wirbelschicht oberhalb der Stelle 6c verwendet man einen gasbeheizten Aufheizbrenner oberhalb der betreffenden Schicht; die Wirbelschicht wird hierdurch bis etwa 600°C aufgeheizt. Diese Temperatur liegt oberhalb der Zündtemperatur der Kohle, die dann durch die Einspeiseeinrichtung 2 aufgegeben wird. Bei einer Betriebstemperatur von etwa 850°C wird der Aufheizbrenner abgeschaltet.

Durch mengengeregelte Aufgabe von Wärmetauschfluid durch den hier einsträngigen Wärmetauscher 8 (Fig. 5) wird die Temperatur konstant gehalten. Da sich unterhalb der Stelle 6c das Wirbelschichtmaterial in Ruhe befindet und somit noch Umgebungstemperatur hat, wird das Wärmetauschfluid in diesem Bereich nicht erwärmt. Die Erwärmung findet erst oberhalb der Stelle 6c statt.

Wird eine grössere Wärmemenge benötigt, wird Luft an der Stelle 6b in die Wirbelschicht geleitet, wodurch jetzt der Bereich oberhalb dieser Stelle wirbelt. Es stellt sich in der vergrösserten Wirbelschicht eine Mischtemperatur ein. Sollte diese unter einen festgelegten Minimalwert absinken, wird die Luftzugabe an der Stelle 6b vorübergehend eingestellt und der Bereich oberhalb 6c wieder auf Betriebstemperatur gebracht. Dieser Vorgang wiederholt sich, bis der gesamte Bereich oberhalb der Stelle 6b die Betriebstemperatur erreicht hat. Die für diese Leistung zusätzlich benötigte Kohle wird ebenfalls an der Stelle 2 aufgegeben. Durch diese Kohlemenge, die eine erhöhte Wärmeabgabe mit sich bringt, muss die Menge an Wärmetauschfluid vergrössert werden, um die Temperatur konstant zu halten.

Bei gewünschter weiterer Leistungssteigerung wird zusätzlich Luft an der Stelle 6a aufgegeben. Dadurch wird auch die untere Schicht aufgewirbelt und diese Sektion, wie zuvor für die mittlere Schicht beschrieben, in Betrieb genommen. Die Kohleaufgabestelle 2 versorgt dann auch diese Sektion mit. Durch die zusätzliche Ausdehnung der Wirbelschicht taucht nun der gesamte Wärmetauscher ein und entzieht somit auf seiner gesamten Länge der Wirbelschicht die gewünschte Wärme.

Um ein Anwachsen der Wirbelschicht durch die mit der Kohle eingebrachte Asche zu verhindern, wird diese über ein Ascheablaufrohr 9 abgezogen.

Soll nun die Leistung reduziert werden, wird die Luft, die an der Stelle 6a in die Wirbelschicht gelangt, abgestellt. Das heisst, der Bereich zwischen 6a und 6b wird zu einem Festbett und wirkt als Isolationsschicht gegenüber der darüber befindlichen Wirbelschicht. Das Wärmetauschfluid, das durch den jetzt im Festbett liegenden Wärmetauscher fliesst, entnimmt diesem dann nach kurzer Zeit kaum noch Wärme und muss in seinem Mengenstrom der veränderten thermischen Leistung des Wirbelschichtreaktors angepasst werden.

Bei weiterer Leistungsreduzierung wird nur noch an der Stelle 6c Luft in die Wirbelschicht gegeben, d.h. der Bereich zwischen 6c und dem Wirbelschichtboden liegt als Festbett vor.

Gegenüber dem Stand der Technik wird deutlich, dass zur Leistungserhöhung oder Leistungsreduzierung kein Wirbelschichtmaterial zugeführt oder abgezogen werden muss. Das ebenfalls bekannte nachteilige Absetzen von Kohlepartikeln auf stillgelegte Wirbelschichtsektionen tritt hierbei nicht auf.

Durch unterschiedliche Aufgabe von Wirbelfluid an den Stellen 6a bis 6d in Fig. 2 können z.B. einzelne Zonen oxidierend oder reduzierend gefahren werden und Wirbelfluida mit unterschiedlicher Temperatur zugeführt werden.

### Patentansprüche

1. Mehrstufiger Wirbelschichtreaktor, bestehend aus einem Behälter (1) mit Einspeise- (2) und Entnahmeeinrichtung (9) für gekörntes, zu behandelndes Material (3) sowie mindestens einer Aufgabeeinrichtung (4) für Wirbelfluid, dadurch gekennzeichnet, dass die Aufgabeeinrichtung (4) aus in verschiedenen Höhen (6a, 6b, ...) über dem Behälterboden (7) (Behandlungsstufen) mit mindestens einer Öffnung endenden und einzeln mit Wirbelfluid beaufschlagbaren Rohren (5a, 5b, ...) bestehen.

2. Wirbelschichtreaktor nach Anspruch 1, gekennzeichnet durch konzentrische Anordnung der Rohre (5a, 5b, ...).

3. Wirbelschichtreaktor nach Anspruch 1 oder 2, gekennzeichnet durch ein oder mehrere, in den Behälter (1) eingetauchte Wärmetauscheinrichtungen (8, 8a, 8b, ...).

4. Wirbelschichtreaktor nach Anspruch 3, dadurch gekennzeichnet, dass die Wärmetauscheinrichtungen (8, 8a, 8b, ...) einzeln mit einem Wärmetauschfluid beaufschlagbar sind.

5. Wirbelschichtreaktor nach Anspruch 3 oder 4, dadurch gekennzeichnet, dass die Wärmetauscheinrichtungen (8, 8a, 8b, ...) in verschiedenen Höhen über dem Behälterboden (7) angeordnet sind.

6. Verfahren zum Betreiben eines Wirbelschichtreaktors nach Anspruch 1, dadurch gekennzeichnet, dass die jeweils oberen Behandlungsstufen vorrangig vor den jeweils unteren Behandlungsstufen mit Wirbelfluid beaufschlagt werden.

7. Verfahren nach Anspruch 6, dadurch gekennzeichnet, dass die Behandlungsstufen mit voneinander verschiedenen Wirbelfluida beaufschlagt werden.

### Claims

1. A multiple-stage fluidized bed reactor, comprising a tank (1) with a supplying device (2) and an extraction device (9) for granular material (3) to be treated and at least one feeding device (4) for fluidizing fluid, characterized in that the feeding device (4) comprises tubes (5a, 5b, ...) which terminate in at least one opening at different levels (6a, 6b, ...) above the base (7) of the tank (treatment stages) and which can be acted upon individually with fluidizing fluid.

2. A fluidized bed reactor according to claim 1, characterized by a concentric arrangement of the tubes (5a, 5b, ...).

3. A fluidized bed reactor according to claim 1 or 2, characterized by one or more heat exchanger devices (8, 8a, 8b, ...) immersed in the tank (1).

4. A fluidized bed reactor according to claim 4, characterized in that the heat exchanger devices (8, 8a, 8b, ...) can be acted upon individually with a heat exchange fluid.

5. A fluidized bed reactor according to claim 3 or 4, characterized in that the heat exchanger devices (8, 8a, 8b, ...) are arranged at different levels above the base (7) of the tank.

6. A method of operating a fluidized bed reactor according to claim 1, characterized in that the respective upper treatment stages are acted upon with fluidizing fluid in precedence of the respective lower treatment stages.

7. A method according to claim 6, characterized in that the treatment stages are acted upon with fluidizing fluids which are different from one another.

### Revendications

1. Réacteur à couches fluidifiées à plusieurs étages, constitué d'une cuve (1) avec un dispositif d'introduction (2) et un dispositif d'évacuation (9) d'un matériau granulé à traiter, ainsi que d'au moins un dispositif d'injection (4) d'un gaz de fluidification, caractérisé en ce que le dispositif d'injection (4) est constitué de tuyaux (5a, 5b, ...), débouchant avec au moins une ouverture à divers niveaux (6a, 6b, ...) (étages de traitement) au-dessus du fond (7) de la cuve, chaque tuyau pouvant être alimenté séparément en gaz de fluidification.

2. Réacteur à couches fluidifiées suivant la revendication 1, caractérisé en ce que les tuyaux (5a, 5b, ...) sont répartis selon une disposition concentrique.

3. Réacteur à couches fluidifiées suivant la revendication 1 ou 2, caractérisé en ce qu'il comprend en outre un ou plusieurs dispositifs échangeurs de la chaleur (8, 8a, 8b, ...), plongeant dans la cuve (1).

4. Réacteur à couches fluidifiées suivant la revendication 3, caractérisé en ce que les dispositifs échangeurs de la chaleur (8, 8a, 8b, ...) peuvent être alimentés séparément avec un milieu de transfert de la chaleur.

5. Réacteur à couches fluidifiées suivant la revendication 3 ou 4, caractérisé en ce que les dispositifs échangeurs de la chaleur (8, 8a, 8b, ...) sont disposés à divers niveaux au-dessus du fond (7) de la cuve.

6. Procédé pour l'opération d'un réacteur à couches fluidifiées suivant la revendication 1, caractérisé en ce que les étages de traitement supérieurs sont alimentés en gaz de fluidification avant les étages de traitement sous-jacents.

7. Procédé suivant la revendication 6, caractérisé en ce que l'on introduit dans les divers étages de traitement des gaz de fluidification différents.

# FIG. 1

# FIG. 2

FIG.3

FIG.4

9

# FIG. 5